# EUROPEAN PATENT APPLICATION

(11) **EP 2 306 782 A1**
(43) Date of publication of application: **06.04.2011**
(21) Application number: 09171993.0
(22) Date of filing: 01.10.2009
(51) Int. Cl.: H04W 72/12, H04L 5/00

(54) **LTE-Advanced coupling between PCFICH and associated PDSCH for cross-component carrier scheduling**

(71) Applicant: Nokia Siemens Networks Oy, 02610 Espoo (FI)
(72) Inventor: Frederiksen, Frank, 9270 Klarup (DK); Rössel, Sabine, 81739 München (DE); Chmiel, Mieszko, 48-340 Glucholazy (PL); Lindh, Lars, 00350 Helsinki (FI)
(74) Representative: TBK-Patent

(57) **Abstract**

An apparatus is described which comprises a receiver configured to receive data/signaling on a first component carrier and data/signaling on at least a second component carrier, wherein each component carrier comprises a control area and a data area, wherein a control format indicator indicates the size of the control area in the first component carrier, and a processor configured to use the control format indicator for the first component carrier also for the second component carrier in case of cross carrier scheduling.

## Description

### Field of the Invention

The present invention relates to an apparatus, method and computer program product for controlling a cross-component carrier scheduling.

### Related background Art

The following meanings for the abbreviations used in this specification apply:

| | |
|---|---|
| 3GPP | 3^{rd} generation partnership project |
| CC | Component carrier |
| CQI | Channel quality indicator |
| C-RNTI | Cell radio network temporary identity |
| CRC | Cyclic redundancy checksum |
| DL | Downlink |
| eNode-B | LTE base station (also referred to as eNB) |
| H-ARQ: | Hybrid Automatic Repeat Request |
| LTE | Long term evolution |
| LTE-A | LTE-Advanced |
| MCS | Modulation and coding scheme |
| MIMO | Multiple input multiple output |
| OFDM | Orthogonal frequency division mulitplexing |
| PCFICH | Physical control format indicator channel |
| PDCCH | Physical downlink control channel |
| PDSCH | Physical Downlink Shared Channel |
| PHICH | Physical H-ARQ indicator channel |
| PRB | Physical Resource Block |
| RB | Resource Block |
| RE | Resource Element |
| Rel | Release |
| RLC | Radio link control |
| RRC | Radio resource control |
| RSRQ | Reference signal received quality |
| SNR | Signal-noise ratio |
| SPS-RNTI | Semi-persistent scheduling radio network temporary identity |
| TBS | Transport block size |
| TS | Technical specification |
| TTI: | Transmission Time Interval |
| UE | User equipment |
| UL | Uplink |

The present application is related to the further evolution of 3GPP long term evolution (LTE), also known as LTE-Advanced. This further evolution is targeted at increasing the peak data rates of LTE. In LTE it is possible to achieve peak data rates up to 300 Mbps (with a 4x4 MIMO configuration). For LTE-Advanced, the peak data rates are tentatively set to a much higher value (around a factor 5 higher), meaning that means to extend the possible data rates needs to be found.

One of the techniques considered for this is the addition of multiple component carriers, meaning that a number of LTE Rel'8 carriers are "concatenated" to provide a larger bandwidth combined carrier. In the current concept thinking, the component carriers being merged/used at the same time may or may not be adjacent. The central element of the aggregation of the component carriers is to (1) increase peak data rate, and (2) allow for concatenation of fragments of frequency resources in a scattered frequency spectrum (for instance in case of spectrum refarming). The present application is related to the concatenation of the component carriers, and the handling of control signaling related to this.

The Rel'8 structure when a UE determines whether it is being scheduled is based on a sequence of estimations/detections, which in the end leads to decoding of a data set intended for the UE. As a starting point, the time-frequency structure for scheduling a UE is divided into two pieces: a region for control channel signaling, and a data-area for the downlink shared channel (which is dynamically shared for transmission of data to different UEs). The control channel part can occupy between 1 and 3 OFDM symbols (or between 2 and 4 for lower LTE system bandwidths) out of a total of 14 OFDM symbols (which in total covers 1 ms transmission time interval - TTI, the assumption used here is normal/short cyclic prefix operation for the long/extended cyclic prefix operation there are 12 OFDM symbols per subframe). The control channel part of the 1 ms time period is used to carry the following channels:
- PCFICH - physical control format indicator channel (tells the UE the division between control and data for this TTI. Possible values are 1-3 (2-4 for 1.4 MHz LTE Rel-8 bandwidth).
- PHICH - Physical H-ARQ indicator channel (used to indicate to a UE whether the uplink transmission was OK or not).
- PDCCH - Physical downlink control channel (used to indicate resource allocations (both uplink and downlink allocations).

Seen from a UE perspective, the UE will in the decoding/detection process initiate the following actions (for a downlink allocation/grant):
- UE evaluates the content of the PCFICH to find the amounts of resources for control and data respectively.
- Following this, the UE starts searching the PDCCH for a resource allocation (DL resource allocation is presumed). This happens whenever one of the IDs of the UE (C-RNTI, SPS C-RNTI) matches one of the PDCCH in the PDCCH search space. The process used for identifying the UE is through CRC masking on the PDCCH payload information.
- When a resource allocation has been found on a PDCCH, the UE will simply start demodulating the PDSCH using the originally estimated division between control and data areas. As the correct PDCCH reception is also dependent on the correct PCFICH decoding, there is a very low probability that a UE attempts to decode a PDSCH without this UE actually being scheduled in the first place.

Now, to expand the peak data rate and to allow for a more fragmented spectrum, some proposals for LTE-Advanced consider the possibility to use multiple aggregated component carriers. Based on some processing limitations on the PDCCH blind decoding, some companies have suggested having independent component carriers, which operate on their own, meaning that each of them is free to determine the division between control and data (basically the PCFICH for two aggregated component carriers can have different values). On top of this, some companies have suggested to allow for cross component carrier scheduling (meaning for example the PDCCH on component carrier #1 can schedule a PDSCH on component carrier #2.).

This approach may seem feasible, but consider the decoding order, the decoding order for the UE is as follows:
- UE evaluates the content of the PCFICH on CC1 (it is assumed to only search component carrier #1 for an allocation) to find the amounts of resources for control and data respectively (on CC1).
- Following this, the UE starts searching the PDCCH on CC1 for a resource allocation
- When a resource allocation has been found on a PDCCH on CC1, the UE will find out that it has been scheduled on CC2, meaning that it will have to introduce an intermediate step.
- UE decodes the PCFICH for CC2 to determine the division between control and data areas.
- The UE will simply start demodulating the PDSCH on CC2, assuming the data area for CC2.

In this case there is a potential problem caused by the case where the UE misinterprets the PCFICH value on CC2. If this happens, the UE will use the wrong assumption for the starting point of the data area, and start performing the rate de-matching (and PDSCH-to-RE de-mapping) using an erroneous assumption, and the bits for the data packet are put into the wrong places (meaning that the H-ARQ soft combining buffer gets corrupted). There is no way for an eNB to detect that this situation has happened, and the only way of recovering is to trigger a RLC retransmission (which might cause the service running to be slowed down). Further, there are no mechanisms to ensure/validate the estimate of the PCFICH value on the CC2.

### Summary of the Invention

Thus, it is an object of the present invention to overcome the above problem of the prior art.

According to several embodiments of the present invention, this is accomplished by an apparatus and a method by which receive data/signaling on a first component carrier and data/signaling on at least a second component carrier are received, wherein each component carrier comprises a control area and a data area, wherein a control format indicator indicates the size of the control area in the first component carrier, and the control format indicator for the first component carrier is also used for the second component carrier in case of cross carrier scheduling.

According to several embodiments of the present invention, an apparatus and a method is provided, by which resources are allocated on a first component carrier and at least a second component carrier, wherein each component carrier comprises a control area and a data area, wherein a control format indicator indicates the size of the control area in the first component carrier, and the control format indicator for the first component carrier is also used for the second component carrier in case of cross carrier scheduling.

### Brief Description of the Drawings

These and other objects, features, details, advantages and technical effects will become more fully apparent from the following detailed description of embodiments of the present invention which is to be taken in conjunction with the appended drawings, in which:
Fig. 1 illustrates a principle according to some embodiments of the present invention;
Fig. 2A and 2B show simplified structures of a user equipment (UE) and an eNode-B according to some embodiments of the present invention; and
Fig. 3A and 3B show processes carried out by user equipment (UE) and an eNode-B according to some embodiments of the present invention;

### Detailed Description of embodiments

In the following, description will be made to embodiments of the present invention. It is to be understood, however, that the description is given by way of example only, and that the described embodiments are by no means to be understood as limiting the present invention thereto.

According to embodiments of the present application, a rule is introduced that binds the data area available for the PDSCH to the PCFICH value of the component carrier which carries the scheduling information. That is, in case a UE detects a PDCCH indicating a downlink allocation on another component carrier, the UE shall assume that the other component carrier is using the same PCFICH value and start data demodulation according to this assumption.

In other words, according to embodiments of the present invention it is proposed to start a PDSCH bit mapping/transmission from the position determined by the PCFICH carried on the component carrier (CC) that also carries the corresponding PDCCH.

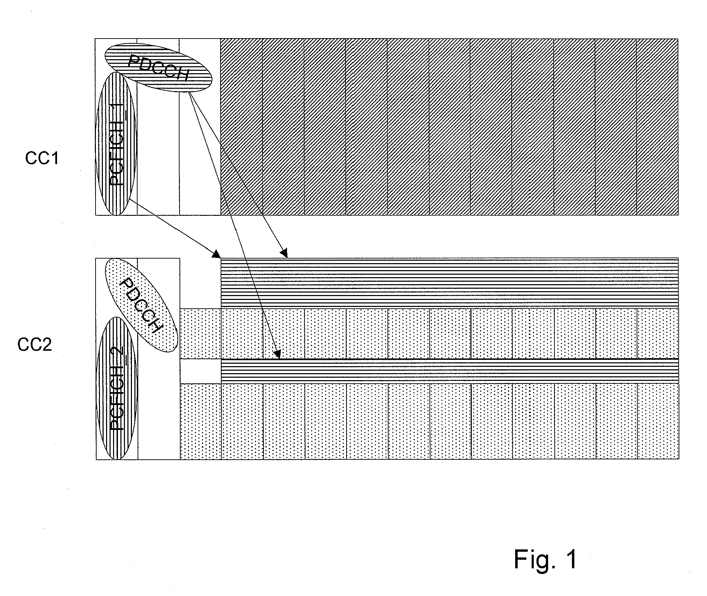

In order to further describe the above concept according to embodiments of the present invention, it is referred to Fig. 1. In Fig. 1, there are two component carriers (CC1 and CC2, also referred to as primary component carrier and secondary component carrier). In this example, there are 3 OFDM (orthogonal frequency division multiplexing) symbols reserved for the first component carrier's control area (and 11 OFDM symbols for data), while the second component carrier only reserves 2 OFDM symbols for the control channel (and 12 OFDM symbols for data). That is, PCFICH 1 for the first component carrier CC1 indicates 3, whereas PCICH_2 for the second component carrier CC2 indicates 2.

By using cross carrier scheduling it is possible to schedule for data transmission on CC2 by using a PDCCH on CC1. This is shown in the figure by the horizontally hatched areas (diagonally horizontally PDCCH on CC1, and horizontally hatched data area on CC2).

With the concept according to the present embodiment as described above, the data area for the cross component carrier scheduled PDSCH should maintain the assumption of the PCFICH being the same as the PCFICH of the originating component carrier. That is, for both component carriers (the point of view of a terminal which received PDCCH on CC1), only PCFICH 1 (=3) is used as the PCFICH.

In this way, there might be less potential for optimizing the data capacity of the secondary component carrier, but the potential H-ARQ buffer corruption is not an issue anymore (due to the validity check through linking between PCFICH_1 and PDCCH on component carrier 1).

It should be noted that a PDCCH on the secondary component carrier will still be able to allocate the full data area, so the loss of data capacity will only be seen when cross component carrier scheduling is applied.

It should be noted that the white areas of the third OFDM symbol represents some radio resources that are not used (and cannot be used), and thereby wasted at the cost of simplicity. This would in general apply to cases where cross-carrier scheduling happens with control area of scheduling PDCCH is larger than control area of scheduled PDSCH. Scheduling within own carrier would not cause any waste of radio resources, as mentioned above.

Also, it should be noted that the reverse operation is not excluded, where a PDCCH on a component carrier schedules data resources on the primary component carrier (or more general on a carrier with a longer PDCCH length, also Fig. 1). In this case, the same PCFICH information should be applied, but the eNB should not remove any information belonging to the control channel part. In such a situation, the UE will put erroneous data into the soft buffer in 1/12 of the places (but 11/12 of the data will be correct, the erroneous bits correspond to the REs in the first or in the first two OFDM symbols of the PDSCH allocation), and the result will be a minor link performance degradation, which channel coding might recover from. If this is not the case, H-ARQ will be able to recover the data through retransmissions. It should be noted that in this case there is no rate matching modification, only some bits are punctured while the position of the others outside of the PDCCH area is not changed. It might be noted that the above issues of the proposed solution like throughput loss or partial soft buffer corruption might be alternatively avoided by coordinated usage of PDCCH resources on the CCs participating in cross component carrier scheduling. In this case by coordinated usage of the PDCCH resources on multiple carriers the eNB ensures that cross-CC scheduled carriers have the same PDCCH area length.

For this secondary scheme with overlapping control and data to operate properly, both the PCFICH linking and PDSCH puncturing scheme would need to be standardized (meaning that data should have lower priority than control when/if these are in overlapping areas).

The notion of Primary Component Carrier refers to the primary carrier for all UEs in a cell: the Primary Component Carrier has full control/common channel cell coverage. Such a Component Carrier may also represent the (only) carrier for UE camping and initial access, hereby referring to the notion of an Anchor Component Carrier. It should be noted that the invention is also applicable when there is no notion of primary/secondary/anchor component carrier.

Multiple Stand-alone Component Carriers in a Carrier Aggregation System may exist and take the role of an Anchor Component Carrier. As the approach described above is UE-related rather than Carrier-related, multiple Anchor Component Carriers can be supported as well using both the first and the second scheme.

Clever eNB cross-CC scheduling implementation and/or Autonomous CC Selection techniques will allow for minimizing the occurrence of the secondary scheme, i.e., a situation in which the control area of the assigning PDCCH CC is shorter than the control area of the corresponding allocated PDSCH CC.

In another embodiment, the above PCFICH linking only kicks in and is used in some cases depending on the value of at least one of the following SNR/MCS/CQI/TBS/coding rate/number of code blocks of the CC with the allocated PDSCH. Otherwise, if one of the above quantities is in a predefined range, the solution is not used and the Rel'8 association of the PCFICH with PDSCH starting OFDM symbol on the same carrier is used.

For example, if code rate is too high or the transport block is too large, the scheme is not used.

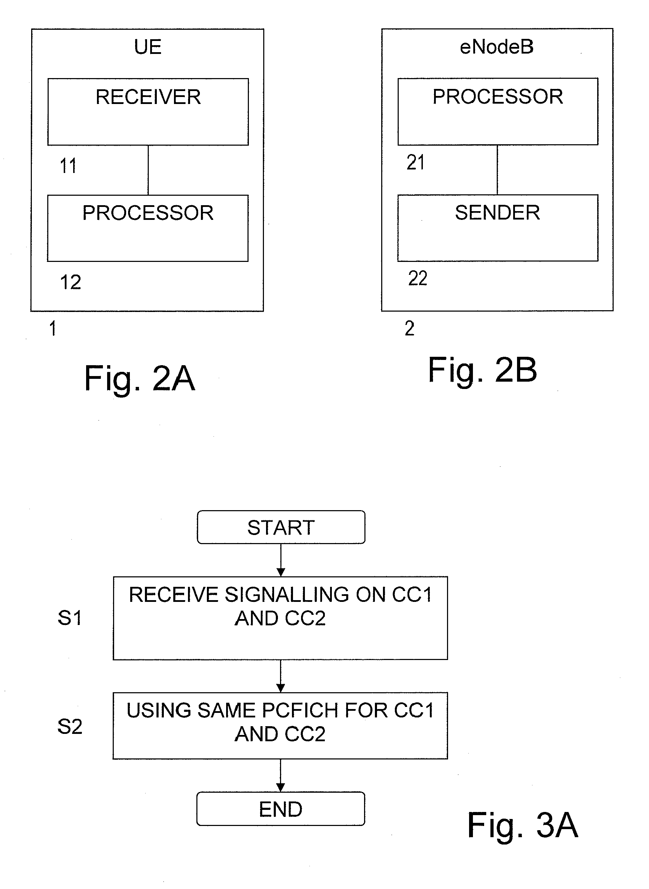

In the following, some embodiments implementing the processes described above are described with respect to Fig. 2A and 2B. In particular, Fig. 2A shows a simplified configuration of a user equipment, and Fig. 2B shows a simplified configuration of an eNodeB as an example for a network control element.

In particular, the UE 1 comprises a receiver 11 and a processor 12. The receiver 11 is configured to receive signaling on a first component carrier (CC1) and at least a second component carrier (CC2) (such as shown in Fig. 1, for example), wherein each component carrier comprises a control area and a data area. A control format indicator (for example, the PCFICH described above) indicates the size of the control area in the first component carrier The processor uses the control format indicator for the first component carrier also for the second component carrier in case cross component carrier scheduling is applied, as also described above in connection with Fig. 1.

Fig. 2B shows an eNodeB 2 comprising a processor 21 and a sender 22. In particular, the processor 21 is configured to allocate resources on the first component carrier and at least the second component carrier. The component carriers as well as the control format indicator (e.g., PCFICH) are the same as described above. The processor 21 uses the control format indicator for the first component carrier also for the second component carrier in case cross component carrier scheduling is applied. Then, the sender 22 may send signaling on the first and second component carrier based on the scheduling as effected by the processor.

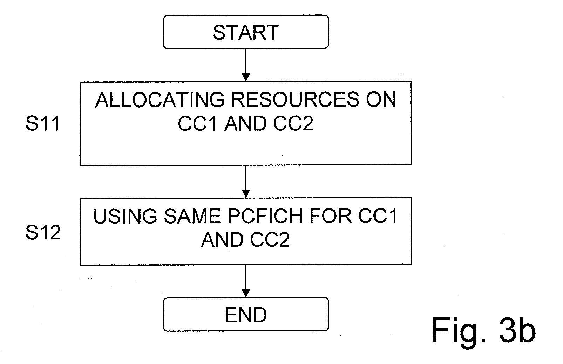

Figs. 3A and 3B show methods according to embodiments of the present invention.

Fig. 3A shows the method as carried out, for example, at the UE. In step S1, signaling on a first component carrier and at least a second component carrier is received. The component carriers as well as the control format indicator (e.g., PCFICH) are the same as described above. In step S2, the control format indicator for the first component carrier is also used for the second component carrier in case cross component carrier scheduling is applied. That is, for the second component carrier, the same control format indicator as for the first component carrier is used, so that the UE may start demodulation based thereon.

Fig. 3B shows the method as carried out on the network side, e.g., at the eNodeB. In step S11, resources are allocated on a first component carrier and at least a second component carrier. The component carriers as well as the control format indicator (e.g., PCFICH) are the same as described above. In step S12, the control format indicator for the first component carrier is also used for the second component carrier in case cross component carrier scheduling is applied. In this case, using may mean that the data channels (e.g. PDSCH) are scheduled on the second component carrier such that the same size of the control area and the same size of the data area are assumed for the first and the second component carriers.

Hence, in this way, a reliable detection of PDSCH can be ensured even in case of cross component carrier scheduling.

According to a first aspect of several embodiments of the invention, an apparatus is provided which comprises
a receiver configured to receive data/signaling on a first component carrier and data/signaling on at least a second component carrier, wherein each component carrier comprises a control area and a data area,
wherein a control format indicator indicates the size of the control area in the first component carrier, and
a processor configured to use the control format indicator for the first component carrier also for the second component carrier in case of cross carrier scheduling.

The first aspect may be modified as follows:

The processor may be configured to use the control format indicator for determining a location of a data channel in the second component carrier.

The apparatus may be or may be part of a user equipment.

According to a second aspect of several embodiments of the invention, an apparatus is provided which comprises
a processor configured to allocate resources on a first component carrier and at least a second component carrier, wherein each component carrier comprises a control area and a data area, wherein
a control format indicator indicates the size of the control area in the first component carrier, and
the processor is configured to use the control format indicator for the first component carrier also for the second component carrier in case of cross carrier scheduling.

The second aspect may be modified as follows:

The apparatus may further comprises a sender configured to send data/signaling on a first component carrier and data/signaling on at least a second component carrier.

The processor may be configured to use the control format indicator for determining a location of a data channel in the second component carrier.

The processor may be configured to not use a resource on the second component area for a data channel in case the resource in the second component area is used for control signaling.

The processor may be configured to use the same control area size for component carriers in case of cross carrier scheduling.

The processor may be configured to use the same control format indicator for the first component carrier and the at least second component carrier depending on the value of at least one of the following signal-noise-ratio (SNR)/modulation and coding scheme (MCS)/channel quality indicator (CQI)/transport block size (TBS)/coding rate/number of code blocks of the component carrier on which a data channel is allocated.

The apparatus is or is part of a network control element.

The network control element may be an eNode-B or a central unit.

Control information (e.g., a PDCCH) may be located in the control area of the first component carrier, the control information indicating the data channel on the second component carrier.

The control format indicator may be included in a physical control format indicator channel.

The control information may be included in a physical downlink control channel.

The data channel may be a physical downlink shared channel.

According to a third aspect of several embodiments of the invention, a method is provided which comprises
receiving data/signaling on a first component carrier and data/signaling on at least a second component carrier,
wherein each component carrier comprises a control area and a data area, a control format indicator indicates the size of the control area in the first component carrier, and
using the control format indicator for the first component carrier also for the second component carrier in case of cross carrier scheduling.

The third aspect may be modified as follows:

The method may further comprise
using the control format indicator for determining a location of a data channel in the second component carrier.

According to a fourth aspect of several embodiments of the invention, a method is provided which comprises
allocating resources on a first component carrier and at least a second component carrier, wherein each component carrier comprises a control area and a data area, wherein
a control format indicator indicates the size of the control area in the first component carrier, and
using the control format indicator for the first component carrier also for the second component carrier in case of cross carrier scheduling.

The fourth aspect may be modified as follows:

The method may further comprise
using the control format indicator for determining a location of a data channel in the second component carrier.

The method may further comprise
not using a resource on the second component area for a data channel in case the resource in the second component area is used for control signaling.

The method may further comprise
using the same control area size for component carriers in case of cross carrier scheduling.

The method may further comprise
using the same control format indicator for the first component carrier and the at least second component carrier depending on the value of at least one of the following signal-noise-ratio (SNR)/modulation and coding scheme (MCS)/channel quality indicator (CQI)/transport block size (TBS)/coding rate/number of code blocks of the component carrier on which a data channel is allocated.

Control information may be located in the control area of the first component carrier the control information indicating the data channel on the second component carrier.

The control format indicator may be included in a physical control format indicator channel.

The control information may be included in a physical downlink control channel.

The data channel may be a physical downlink shared channel.

According to a fifth aspect of several embodiments of the present invention, a computer program product is provided which comprises code means for performing a method according to any one of the third and fourth aspects and their modifications when run on a computer.

The computer program product is embodied on a computer-readable medium.

The computer program product may be directly loadable into an internal memory of the computer.

According to a sixth aspect of several embodiments of the invention, an apparatus is provided which comprises
means for receiving data/signaling on a first component carrier and data/signaling on at least a second component carrier, wherein each component carrier comprises a control area and a data area,
wherein a control format indicator indicates the size of the control area in the first component carrier, and
means for using the control format indicator for the first component carrier also for the second component carrier in case of cross carrier scheduling.

The apparatus may further comprise means for using the control format indicator for determining a location of a data channel in the second component carrier.

According to a seventh aspect of several embodiments of the invention, an apparatus is provided which comprises
means for allocating resources on a first component carrier and at least a second component carrier, wherein each component carrier comprises a control area and a data area, wherein
a control format indicator indicates the size of the control area in the first component carrier, and
means for using the control format indicator for the first component carrier also for the second component carrier in case of cross carrier scheduling.

The seventh aspect may be modified as follows:

The apparatus may further comprise means for sending data/signaling on a first component carrier and data/signaling on at least a second component carrier.

The apparatus may further comprise means for using the control format indicator for determining a location of a data channel in the second component carrier.

The apparatus may further comprise means for not using a resource on the second component area for a data channel in case the resource in the second component area is used for control signaling.

The apparatus may further comprise means for using the same control area size for component carriers in case of cross carrier scheduling.

The apparatus may further comprise means for using the same control format indicator for the first component carrier and the at least second component carrier depending on the value of at least one of the following signal-noise-ratio (SNR)/modulation and coding scheme (MCS)/channel quality indicator (CQI)/transport block size (TBS)/coding rate/number of code blocks of the component carrier on which a data channel is allocated. Further modifications of the sixth and seventh aspects are similar as those of the first and second aspects.

It is to be understood that any of the above modifications can be applied singly or in combination to the respective aspects and/or embodiments to which they refer, unless they are explicitly stated as excluding alternatives.

For the purpose of the present invention as described herein above, it should be noted that
- method steps likely to be implemented as software code portions and being run using a processor at a network element or terminal (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the invention in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above, UE, eNode-B etc. as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar
CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined apparatuses, or any one of their respective means) can be implemented as individual devices, units or means, but this does not exclude that they are implemented in a distributed fashion throughout the system, as long as the functionality of the device, unit or means is preserved;
- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

It is noted that the embodiments and examples described above are provided for illustrative purposes only and are in no way intended that the present invention is restricted thereto. Rather, it is the intention that all variations and modifications be included which fall within the spirit and scope of the appended claims.

## Claims

1. An apparatus comprising
a receiver configured to receive data/signaling on a first component carrier and data/signaling on at least a second component carrier, wherein each component carrier comprises a control area and a data area,
wherein a control format indicator indicates the size of the control area in the first component carrier, and
a processor configured to use the control format indicator for the first component carrier also for the second component carrier in case of cross carrier scheduling.

2. The apparatus according to claim 1, wherein the processor is configured to use the control format indicator for determining a location of a data channel in the second component carrier.

3. An apparatus comprising
a processor configured to allocate resources on a first component carrier and at least a second component carrier, wherein each component carrier comprises a control area and a data area, wherein
a control format indicator indicates the size of the control area in the first component carrier, and
the processor is configured to use the control format indicator for the first component carrier also for the second component carrier in case of cross carrier scheduling.

4. The apparatus according to claim 3, wherein the processor is configured to use the control format indicator for determining a location of a data channel in the second component carrier.

5. The apparatus according to claim 3 or 4, wherein
the processor is configured to not use a resource on the second component area for a data channel in case the resource in the second component area is used for control signaling, and/or
wherein the processor is configured to use the same control area size for component carriers in case of cross carrier scheduling.

6. The apparatus according to one of the claims 3 to 5, wherein the processor is configured to use the same control format indicator for the first component carrier and the at least second component carrier depending on the value of at least one of the following signal-noise-ratio/modulation and coding scheme/channel quality indicator/transport block size/coding rate/number of code blocks of the component carrier on which a data channel is allocated.

7. The apparatus according to any of the claims 1 to 6, wherein control information is located in the control area of the first component carrier, the control information indicating the data channel on the second component carrier.

8. A method comprising
receiving data/signaling on a first component carrier and data/signaling on at least a second component carrier,
wherein each component carrier comprises a control area and a data area, a control format indicator [PCFICH] indicates the size of the control area in the first component carrier, and
using the control format indicator for the first component carrier also for the second component carrier in case of cross carrier scheduling.

9. The method according to claim 8, further comprising
using the control format indicator for determining a location of a data channel in the second component carrier.

10. A method comprising
allocating resources on a first component carrier and at least a second component carrier, wherein each component carrier comprises a control area and a data area, wherein
a control format indicator [PCFICH] indicates the size of the control area in the first component carrier, and
using the control format indicator for the first component carrier also for the second component carrier in case of cross carrier scheduling.

11. The method according to claim 10, further comprising
using the control format indicator for determining a location of a data channel in the second component carrier.

12. The method according to claim 10 or 11, further comprising
not using a resource on the second component area for a data channel in case the resource in the second component area is used for control signaling, and/or
using the same control area size for component carriers in case of cross carrier scheduling.

13. The method according to one of the claims 10 to 12, further comprising
using the same control format indicator for the first component carrier and the at least second component carrier depending on the value of at least one of the following signal-noise-ratio /modulation and coding scheme/channel quality indicator/transport block size/coding rate/number of code blocks of the component carrier on which a data channel is allocated.

14. The method according to any of the claims 8 to 13, wherein control information is located in the control area of the first component carrier the control information indicating the data channel on the second component carrier.

15. A computer program product comprising code means for performing a method according to any one of claims 8 to 14 when run on a computer.
